(19) Europäisches Patentamt
European Patent Office
Office européen des brevets

(11) **EP 4 772 664 A1**

(12) **EUROPEAN PATENT APPLICATION**
published in accordance with Art. 153(4) EPC

(43) Date of publication:
08.07.2026 Bulletin 2026/28

(21) Application number: 24858596.0

(22) Date of filing: 28.08.2024

(51) International Patent Classification (IPC):
*C22C 38/04* (2006.01)   *C22C 38/02* (2006.01)
*C22C 38/06* (2006.01)   *C22C 38/14* (2006.01)

(52) Cooperative Patent Classification (CPC):
C21D 8/02; C22C 33/04; C22C 38/02; C22C 38/04;
C22C 38/06; C22C 38/14

(86) International application number:
PCT/CN2024/115005

(87) International publication number:
WO 2025/045062 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.08.2023 CN 202311089502

(71) Applicant: BAOSHAN IRON & STEEL CO., LTD.
Shanghai 201900 (CN)

(72) Inventors:
• ZHANG, Yulong
  Shanghai 201900 (CN)
• CHEN, Guang
  Shanghai 201900 (CN)

• LUO, Shuai
  Shanghai 201900 (CN)
• LIU, Chunsu
  Shanghai 201900 (CN)
• JIN, Xinyan
  Shanghai 201900 (CN)
• HE, Zhe
  Shanghai 201900 (CN)
• WANG, Jintao
  Shanghai 201900 (CN)
• HUANG, Caigen
  Shanghai 201900 (CN)
• LIU, Jian
  Shanghai 201900 (CN)

(74) Representative: Kuhnen & Wacker
Patent- und Rechtsanwaltsbüro PartG mbB
Prinz-Ludwig-Straße 40 A
85354 Freising (DE)

(54) **ECONOMICAL 800 MPA-GRADE HOT-ROLLED HOT-DIP GALVANIZED STEEL SHEET AND MANUFACTURING METHOD THEREFOR**

(57) Disclosed in the present invention is an economical 800 MPa-grade hot-rolled hot-dip galvanized steel sheet, comprising a substrate and a hot-dip galvanized layer. The substrate contains Fe and inevitable impurities. In addition, the substrate further contains the following chemical elements in percentage by mass: 0.05-0.10% of C, 1.4-2.0% of Mn, 0.10-0.15% of Ti, and 0.02-0.08% of Al. The substrate does not contain elements Si, Cr, Mo and Ni. Microstructures of the substrate include a complex-phase structure of granular bainite and ferrite, and second-phase particle precipitates; the volume fraction of the second-phase particle precipitates is not less than 0.2%; and the ratio of the volume fraction of the second-phase particle precipitates having a size not greater than 10 nm to the volume fraction of all the second-phase particle precipitates is greater than 80%. Correspondingly, further disclosed in the present invention is a manufacturing method for the economical 800 MPa-grade hot-rolled hot-dip galvanized steel sheet.

## Description

### Technical Field

The present disclosure relates to a steel plate and a manufacturing method therefor, in particular to a hot-dip galvanized steel plate and a manufacturing method therefor.

### Background Art

With the development of light-weighting technology for automobiles, the proportion of advanced high-strength steel in automotive structural parts is increasing. Complex phase steels with an ultra-high strength and good formability have become the first choice for chassis parts such as control arms and torsion beams. Among them, a hot-rolled galvanized steel plate is one of the effective ways to improve the corrosion resistance of automotive chassis.

The Chinese patent document with the publication number CN104513930A, published on April 15, 2015, and titled "Ultra-high Strength Hot-Rolled Complex Phase Steel Plate and Strip with Good Bending and Hole Expansion Performance and Manufacturing Method Therefor" discloses an ultra-high strength hot-rolled complex phase steel plate and strip with good bending performance, which comprises the following composition in weight percentages: C 0.07%-0.14%, Si 0.1%-0.4%, Mn 1.55%-2.00%, P $\leq$ 0.015%, S $\leq$ 0.004%, Al 0.01% -0.05%, N $\leq$ 0.005%, and Cr 0.15%-0.50%, and further comprises at least one of the following alloy elements: Nb $\leq$ 0.05% and Ti 0.06%-0.15%, with the balance of Fe and inevitable impurities. This patent focuses on the performance design and manufacturing method of a hot-rolled pickled steel plate.

The Chinese patent document with the publication number CN113215485A, published on August 6, 2021, titled "A 780MPa hot-rolled coating dual-phase steel and manufacturing method therefor", discloses the chemical composition of the steel as follows: C: 0.04%-0.08%, Si: 0.5% -0.8%, Mn: 1.4%- 2.1%, Al: 0.02%-0.08%, Nb: 0.04-0.07%, Ti: 0.05-0.14%, Cr: 0-0.25%, Cu: 0-0.01%, Ni: 0-0.01%, B: 0-0.001%, P: 0-0.015%, S: 0-0.001%, with a balance of Fe and inevitable impurities. The content of Si is relatively high in this patent.

Currently, the requirement for steel for automobiles has been increased continuously in automobile manufacturers. In addition to mechanical performance, formability, and corrosion resistance, there is also a requirement for steel plates with lower cost. As such, the present disclosure aims to provide an economical high-strength hot-rolled hot-dip galvanized steel.

### Summary

One objective of the present disclosure is to provide an economical 800MPa-grade hot-rolled hot-dip galvanized steel plate, which has low cost, and also has good formability and strength. It can be used for automotive structural parts and chassis parts, as well as other applications requiring high strength, weight reduction, and corrosion resistance.

In order to achieve the above objective, the present disclosure provides an economical 800MPa-grade hot-rolled hot-dip galvanized steel plate, which comprises a substrate and a hot-dip galvanized layer, the substrate comprises Fe and inevitable impurities, further the substrate also comprises the following chemical elements in mass percentages:

C: 0.050-0.100%, Mn: 1.400-2.000%, Ti: 0.100-0.150%, and Al: 0.020-0.080%;
the substrate does not comprise elements Si, Cr, Mo, and Ni;
the microstructure of the substrate comprises a complex phase structure of granular bainite and ferrite, as well as second-phase particle precipitates. The second-phase particle precipitates have a volume fraction of not less than 0.2%, and a volume fraction of the second-phase particle precipitates with a size of not greater than 10nm in total second-phase particle precipitates is greater than or equal to 80%.

Further, in the economical 800MPa-grade hot-rolled hot-dip galvanized steel plate according to the present disclosure, the mass percentages of each chemical element in the substrate are:
C: 0.050-0.100%, Mn: 1.400-2.000%, Ti: 0.100-0.150%, Al: 0.020-0.080%; with a balance of Fe and other inevitable impurities.

In the economical 800MPa-grade hot-rolled hot-dip galvanized steel plate according to the present disclosure, the substrate does not comprise expensive metal elements Cr, Mo, and Ni.

The existing ultra-high strength steels with 800MPa grade typically have a certain amount of martensite. Therefore, for a hot-dip galvanizing process, it is necessary to add more alloy elements such as Cr and Mo to delay phase transformation and reduce a critical cooling rate, so that a portion of the undercooled austenite may be retained to phase transform into martensite after galvanizing. However, the presence of martensite may lead to non-uniform hardness in the microstructure, resulting in a lower hole expansion ratio. Therefore, unlike conventional martensite transformation strengthened steels, a microstructure of granular bainite + second-phase particle precipitates + a small amount of ferrite is designed to achieve high strength without adding expensive alloy elements in the present disclosure.

The strength of bainite is insufficient, so that strong precipitation strengthening need to be obtained to improve the strength. However, during hot rolling and coiling process, and hot-dip galvanizing process, the second-phase particles are prone to coarsening after precipitation, thereby resulting in the weakening of precipitation effect. Generally, a certain amount of element Mo may be added to reduce the tendency of coarsening. However, element Mo is very expensive. To further reduce costs, element Mo is not added in the present disclosure. Therefore, a hot-rolling, annealing, and hot-dip galvanizing process are strictly controlled to increase a volume fraction of the second-phase and reduce the tendency of coarsening, thereby a structural characteristic is obtained in which a volume fraction of the second-phase particle precipitates is not less than 0.2%, and a volume fraction of the second-phase particle precipitates with a size of not greater than 10nm in total second-phase particle precipitates is greater than or equal to 80%, so as to achieve the technical effect of the present disclosure.

From the perspective of microstructure design, ferrite is relatively soft and has low strength. When the content of ferrite is relatively high, microcracks are prone to formation on the interface of ferrite and bainite under external forces, reducing a hole expansion ratio. Therefore, the microstructure is mainly granular bainite in the present disclosure.

Furthermore, the precipitation of second-phase particles is a key strengthening mechanism in the present disclosure. Only when the second-phase particles precipitated have sufficient volume fraction and are fine in size, a hole expansion ratio and strength can both be improved. In the present disclosure, when the second-phase particles have a volume fraction of less than 0.2%, the steel plate may have a yield strength of less than 680 MPa. The second-phase particle precipitates are precipitated at various stages of a cooling process. Particles precipitated during a high-temperature rolling stage of the hot rolling process have larger sizes, typically 20 nm or more, and a strengthening effect is weaker. The second-phase particles precipitated during the cooling and annealing process after hot rolling have smaller sizes (less than 10 nm), resulting in a significant strengthening effect. In the present disclosure, only when a volume fraction of second-phase particle precipitates with a size of not greater than 10nm in total second-phase particle precipitates is greater than or equal to 80%, the yield strength of steel plate can reach 680 MPa or more.

From the perspective of component design, the design principles of each chemical element in the present disclosure are as follows:

C: The level of content of C largely determines the tensile strength grade of a steel plate. Carbon may stabilize austenite and promote the formation of bainite. Carbon and micro-alloying elements form sufficient precipitation strengthening phase, thereby ensuring the strength of steel. However, an increase in mass percentage of carbon may lead to deterioration in formability and weldability. As such, the mass percentage of carbon is controlled at 0.050-0.100% in the present disclosure.

Mn: Manganese is a solid solution strengthening element which can improve hardenability, delay pearlite transformation, lower a bainite transformation temperature, and refine bainite microstructure. In the present disclosure, when the mass percentage of manganese is relatively low, it will result in insufficient strength; when the mass percentage of manganese is relatively high, it will lead to a decrease in the plasticity of the steel plate and also easily lead to segregation. As such, the mass percentage of Mn is controlled at 1.400-2.000% in the present disclosure.

Ti: In the present disclosure, titanium is a crucial precipitation strengthening and grain refinement element. Particularly during a hot-dip galvanizing and annealing process, Ti may precipitate in the form of TiC, improve the strength of the ferrite matrix and help to increase a yield ratio and elongation. Therefore, the mass percentage of Ti is controlled at 0.100-0.150% in the present disclosure.

Al: Al is a deoxidation element in the steel, and Al may reduce oxide inclusions and purify the steel quality, and is beneficial for improving the formability of the steel plate. However, when the mass percentage of aluminum is relatively high, oxidation may occur, and it may further affect a continuous casting production. As such, the mass percentage of Al is controlled at 0.020-0.080% in the present disclosure.

Further, in the economical 800MPa-grade hot-rolled hot-dip galvanized steel plate according to the present disclosure, the substrate further comprises at least one of the following chemical elements:

$$0 < Nb \leq 0.030\%;$$

$$0 < B \leq 0.003\%.$$

and

The addition of Nb and B may further improve the performance of the hot-dip galvanized steel plate according to the present disclosure. wherein:

Nb: Niobium is one of the important elements for precipitation strengthening and grain refinement strengthening. However, when the mass percentage of Nb is higher than 0.030%, the increment in strengthening effect of Nb is decreased, and the cost is relatively high. Therefore, the mass percentage of Nb is controlled at Nb ≤ 0.030% in the present disclosure.

B: Boron helps to expand the bainite phase region, ensure that bainite structure is obtained in the steel plate during a cooling process after rolling, and significantly improve the strength and hardness of the steel. However, excessive B element may lead to excessive martensite structure in the steel plate, resulting in a decrease in a hole expansion ratio and elongation of the steel. Therefore, the mass percentage of B is controlled at B≤0.003% in the present disclosure.

In the present disclosure, the inevitable impurities are primarily S, P, and N. Their contents are desired to be as low as possible within the constraints of technical feasibility.

Further, in the economical 800MPa-grade hot-rolled hot-dip galvanized steel plate according to the present disclosure, among the inevitable impurities in the substrate, it may be controlled as follow: P≤0.02%, N≤0.005%, and S≤0.005%.

Further, in the economical 800MPa grade hot-rolled hot-dip galvanized steel plate according to the present disclosure, granular bainite has a volume fraction of not less than 95%. Apart from the granular bainite and the second-phase particle precipitates, the balance is ferrite.

Further, in the economical 800MPa-grade hot-rolled hot-dip galvanized steel plate according to the present disclosure, the second-phase particle precipitates have a volume fraction of 0.2-0.35%.

Further, in the economical 800MPa-grade hot-rolled hot-dip galvanized steel plate according to the present disclosure, a volume fraction of the second-phase particle precipitates with a size of not greater than 10nm in total second-phase particle precipitates is 80-95%.

Further, in the economical 800MPa grade hot-dip galvanized steel plate according to the present disclosure, the granular bainite has a grain size of less than 5μm, such as 3.0-4.8μm.

Generally speaking, when the grain size is larger, the yield strength is lower. In the present disclosure, a content of ferrite is relatively low, so the grain size of bainite has a significant impact on the yield strength. In order to achieve the technical effect of the present disclosure, the grain size of granular bainite is controlled to be less than 5μm.

Further, in the economical 800MPa-grade hot-rolled hot-dip galvanized steel plate according to the present disclosure, the steel plate has a yield strength of ≥680MPa, a tensile strength of ≥800MPa, an elongation A80 of ≥15%, and a hole expansion ratio of ≥50%.

In some embodiments, the economical 800MPa-grade hot-rolled hot-dip galvanized steel plate of the present disclosure has a yield strength of ≥700MPa or ≥730MPa. In some embodiments, the economical 800MPa-grade hot-rolled hot-dip galvanized steel plate of the present disclosure has a yield strength of 680-800MPa, such as 700-800MPa.

In some embodiments, the economic 800MPa grade hot-dip galvanized steel plate of the present disclosure has a tensile strength of 800-850 MPa.

In some embodiments, the economical 800MPa grade hot-dip galvanized steel plate of the present disclosure has an elongation A80 of 15.0-19.5%.

In some embodiments, the economic 800MPa grade hot-dip galvanized steel plate of the present disclosure has a hole expansion ratio of 50.0-80.0%.

In addition, another objective of the present disclosure is to provide a manufacturing method for the economical 800MPa-grade hot-rolled hot-dip galvanized steel plate. The desired structure characteristics of the present disclosure can be obtained by combining this method with the component design of the present disclosure, thereby obtaining a hot-dip galvanized steel plate with low-cost, and good formability and strength.

To achieve the above objective, the present disclosure provides a manufacturing method for the above economical 800MPa-grade hot-rolled hot-dip galvanized steel plate, which comprises the steps of:

preparing a slab;
heating the slab and holding;
hot rolling, then cooling at a cooling rate of ≥50°C/s to a coiling temperature of 450-500°C and coiling;
pickling to obtain a pickled coil;
annealing and hot-dip galvanizing: the pickled coil is directly annealed in a fired non-oxidizing continuous annealing furnace, wherein a temperature in a direct-fired section is controlled at 550-630°C, a temperature in a heating section is controlled at 630-720°C, a temperature in a soaking section is controlled at 630-720°C, a holding time in a soaking section is controlled at 50-100s, a temperature in a slow cooling section is controlled at 550-670°C, and after exiting the slow cooling section it is cooled to a hot-dip galvanizing temperature.

In some embodiments, a slab is prepared through smelting and casting. The slab preferably has a thickness of 220-250mm.

In addition, the pickled coil may be cooled to a hot-dip galvanizing temperature at a cooling rate of ≥5°C/s after exiting a slow cooling section in the present disclosure. Any specific limitations on this cooling rate is not imposed in the present disclosure, because austenite is not formed during the soaking process, and no phase transformation occurs during the cooling process in the present disclosure. Therefore, a cooling rate after exiting a slow cooling section has no impact on performance. A rate of ≥5°C/s ensures normal operation of conventional units.

By controlling the cooling process after hot-rolling and the heating procedure of annealing process in the manufacturing method of the present disclosure, second-phase particle precipitates have a smaller size (less than 10nm), and a significant strengthening effect.

In the present disclosure, a cooling rate after rolling is controlled at ≥50°C/s to make hot-rolled steel plate quickly enter the bainite transformation zone and obtain a fine bainite structure. When the cooling rate is less than 50°C/s, more ferrite or pearlite may be generated during the cooling process. In some embodiments, a cooling rate after rolling is 50-80°C/s. Additionally, a coiling temperature after cooling is controlled at 450-500°C to obtain granular bainite structure with refined M/A islands. When a coiling temperature is relatively high, pearlite tends to form with larger grain size, and numerous second-phase particles may precipitate and coarsen during the cooling process after coiling, leading to reduced strength after hot-dip galvanizing and annealing process. When a coiling temperature is relatively low, martensite may be formed, resulting in a lower hole expansion ratio.

Furthermore, a temperature in the direct-fired section is controlled at 550-630°C in the present disclosure, because: when a temperature in the direct-fired section exceeds 630°C, a heating rate is decreased, the second-phase particle precipitation is prone to coarsening, the strengthening effect is weakened, resulting in insufficient yield strength. When a temperature in the direct-fired section is less than 550°C, a subsequent heating load on a radiant tube is increased, and a soaking temperature is difficult to stably control, which is not conducive to obtaining a steel coil with uniform performance from head to tail.

In the present disclosure, a temperature in the heating section and a temperature in the soaking section of annealing process are both 630-720°C. When a temperature in the heating section and a temperature in the soaking section are less than 630°C, the volume fraction of second-phase precipitates during the soaking process is relatively low, resulting in lower strength. When a temperature in the heating section and a temperature in the soaking section exceed 720°C, martensite will be generated during the cooling process, leading to lower hole expansion ratio and lower yield strength.

In addition, a holding time in the soaking section of annealing process is 50-100s, because: when a holding time in the soaking section of annealing process is less than 50s, the internal stress of the steel plate in the hot-rolling process fails to eliminate completely, and the surface condition of the steel plate is poor, which making it difficult to obtain a good hot-dip galvanized surface. However, when a holding time in the soaking section exceeds 100s, the second-phase particles coarsen and dissolve significantly, leading to a decrease in strength and failing to ensure the yield strength of the steel plate.

In the present disclosure, a temperature in the slow cooling section is controlled at 550-670°C, because: when a temperature in the slow cooling section is relatively high, the second-phase particles that precipitate during the heating process may gradually coarsen, resulting in a decrease in yield strength.

Further, in the manufacturing method according to the present disclosure, the slab is heated to 1230-1280°C with a holding time of 1-3 hours.

In this embodiment, a heating temperature is controlled at ≥1230°C to make (Ti, Nb)(C, N) generated during the continuous casting process dissolve as much as possible, the solid solution of Ti and other micro-alloy elements in austenite precipitates as nanoscale second-phase particles during hot rolling and coiling process, especially during the annealing and hot-dip galvanizing process, effectively further improving the strength of the steel plate. However, when a temperature exceeds 1280°C, austenite grains coarsen, which is detrimental to the toughness of the steel plate; and the iron oxide scale is thicker, which is not conducive to the descaling of the iron oxide scale, thereby ultimately affecting the surface quality of hot-dip galvanizing. Therefore, preferably, a heating temperature is controlled at 1230-1280°C.

Further, in the manufacturing method according to the present disclosure, during the hot rolling process, a start rolling temperature for rough rolling is controlled at 1130-1190°C, a start rolling temperature for finish rolling is controlled at 980-1080°C, and an outlet temperature for finish rolling is controlled at 840-940°C.

In the present disclosure, controlling a rough rolling temperature during the hot rolling process has a significant impact on micro-alloy elements such as Ti. At a relatively low rough rolling temperature and during the finish rolling process, Ti carbides and carbonitrides may precipitate, and the precipitation size in this process is relatively large, which is not conducive to further improving strength. Therefore, a start rolling temperature for rough rolling is controlled at 1130-1190°C, and a start rolling temperature for finish rolling is controlled at 980-1080°C.

In addition, an outlet temperature for finish rolling during the hot rolling process also has an impact on the microstructure. When an outlet temperature for finish rolling is relatively low, austenite grains are pancake-shaped, a large amount of deformation energy is accumulated, which is beneficial for reducing grain size during the subsequent cooling process and for improving a hole expansion ratio. However, when an outlet temperature for finish rolling is too low, ferrite is generated, leading to a decrease in a hole expansion ratio. When an outlet temperature for finish rolling is too high, it is detrimental to the surface quality. Therefore, preferably, an outlet temperature for finish rolling during the hot rolling process is controlled at 840-940°C.

In some embodiments, a cumulative deformation amount of rough rolling and finish rolling during the hot rolling process is controlled at ≥90%.

In some embodiments, after the completion of the coiling process, a hot coil is placed in a soaking pit for slow cooling, and an average cooling rate is ≤15°C/h.

In some embodiments, an elongation of pickling tension leveling may be 0.2-2% to further control the plate shape, thereby achieving better surface quality. Additionally, to further achieve better surface quality, a pickling speed of 60-150m/min may be adopted; a temperature of the last pickling acid tank during the pickling process is controlled at 80-90°C, and a concentration of ferric ion is controlled at 30-40g/L.

Further, in the manufacturing method according to the present disclosure, during the hot-dip galvanizing process, a hot-dip galvanizing temperature is 440-480°C.

A hot-dip galvanizing temperature is 440-480°C, because within this range, the bondability between the steel plate surface and the zinc liquid is better. A temperature below or above this range will result in poorer coatability of the substrate surface, which may lead to poor surface quality after galvanizing.

Hot-dip galvanizing may be performed using the plating solutions well-known in the art. In some embodiments, a single-side weight of the hot-dip galvanized layer may be 20-380g/m$^2$.

Further, in the manufacturing method according to the present disclosure, temper rolling is also carried out after the hot-dip galvanizing process, and a temper rolling rate is controlled at 0.05-1.3%.

In this embodiment, in order to further achieve better surface quality based on the implementation effect of the present disclosure, a temper rolling rate after hot-dip galvanizing is controlled at 0.05-1.3%. When a temper rolling rate is less than 0.05%, the surface quality of the galvanized layer is poor. When a temper rolling rate is greater than 1.3%, significant work-hardening will occur, and an elongation of the steel plate tends to be reduced.

In some embodiments, the hot-dip galvanized steel plate of the present disclosure has a thickness of 1.8-3.5mm.

The economical 800MPa-grade hot-rolled hot-dip galvanized steel plate and its manufacturing method according to the present disclosure have the following advantages and beneficial effects:

The economical 800MPa-grade hot-rolled hot-dip galvanized steel plate of the present disclosure does not comprise expensive metal elements Cr, Mo, and Ni, therefore, it has low cost and can still guarantee a strength grade of 800MPa.

In some embodiments, the economical 800MPa-grade hot-rolled hot-dip galvanized steel plate of the present disclosure has a yield strength of ≥680MPa, a tensile strength of ≥800MPa, an elongation A80 of ≥15%, and a hole expansion ratio of ≥50%. Therefore, it can be used for automotive chassis and structural parts, and meet the technical requirements for flanging, stamping, and vehicle light-weighting of automotive complex parts.

The economical 800MPa-grade hot-rolled hot-dip galvanized steel plate of the present disclosure does not comprise elements Si and Cr. Compared with the hot-dip galvanized steel plates of the same type, it has superior surface quality and corrosion resistance. It should be noted that, the absence of Si and Cr in the present disclosure means they do not need to be intentionally added during the smelting process. Since iron ore and scrap steel comprise a small amount of Si and Cr, even if the finished steel plate has trace amount of Si and Cr, such as less than 0.1%, they are residual elements and not intentionally added components in the present disclosure.

The economical 800MPa-grade hot-rolled hot-dip galvanized steel plate of the present disclosure is suitable for conventional continuous hot-rolling production lines and hot-dip galvanizing production lines. Compared with traditional manufacturing methods of hot-dip galvanized steel plate, the present disclosure eliminates a cold rolling process, shortens the process flow, improves production efficiency, and saves energy.

**Detailed Description**

The economical 800MPa-grade hot-rolled hot-dip galvanized steel plate and the manufacturing method therefor will be further explained and illustrated with reference to the specific examples. Nonetheless, the explanation and illustration are not intended to unduly limit the technical solution of the disclosure.

The economical 800MPa-grade hot-rolled hot-dip galvanized steel plates in each example of the present disclosure are all made using the following steps:

(1) Smelting and casting to prepare a slab, and the slab has a thickness of 220mm-250mm. Table 1 lists the mass percentage of each chemical element of the slab in each example and comparative example of the present disclosure.

(2) Heating the slab to 1230-1280°C with a holding time of 1-3 hours.

(3) Hot rolling: a start rolling temperature for rough rolling is controlled at 1130-1190°C, a start rolling temperature for finish rolling is controlled at 980-1080°C, and an outlet temperature for finish rolling is controlled at 840-940°C. a cumulative deformation amount of rough rolling and finish rolling during the hot rolling process may be ≥90%.

(4) After hot rolling, cooling at a cooling rate of ≥50°C/s to a coiling temperature of 450-500°C.

In some embodiments, optionally, after the completion of the coiling process, the hot coil may be placed in a soaking pit for slow cooling, and an average cooling rate is ≤15°C/h.

(5) Pickling to obtain a pickled coil.

In some embodiments, an elongation of pickling tension leveling may be 0.2-2% to further control the plate shape, thereby achieving better surface quality. To further achieve better surface quality, a pickling speed of 60-150m/min may further be adopted; a temperature of the last pickling acid tank during the pickling process is controlled at 80-90°C, and a concentration of ferric ion is controlled at 30-40g/L.

(6) Annealing and hot dip galvanizing: The pickled coil is directly annealed in a fired non-oxidizing continuous annealing furnace, wherein a temperature in a direct-fired section is controlled at 550-630°C, a temperature in a heating section is controlled at 630-720°C, a temperature in a soaking section is controlled at 630-720°C, a holding time in a soaking section is controlled at 50-100s, a temperature in a slow cooling section is controlled at 550-670°C, and after exiting the slow cooling section, it is cooled to a hot-dip galvanizing temperature of 440-480°C at a cooling rate of ≥5°C/s, then hot-dip galvanizing is carried out. The single-side weight of the hot dip galvanized layer may be 20-380g/m$^2$.

(7) Temper rolling: a temper rolling rate is controlled at 0.05-1.3%, and a hot-dip galvanized steel plate with a thickness of 1.8-3.5mm is obtained.

Table 1 lists the mass percentages of each chemical element in the substrate of each example and comparative example.

Table 1. (wt%, with balance of Fe and other inevitable impurities except P, S, and N)

| Steel grade | C | Mn | P | S | N | Al | Ti | Nb | B |
|---|---|---|---|---|---|---|---|---|---|
| A | 0.063 | 1.572 | 0.009 | 0.0018 | 0.005 | 0.050 | 0.133 | 0.017 | - |
| B | 0.059 | 1.494 | 0.017 | 0.0043 | 0.000 | 0.075 | 0.132 | - | - |
| C | 0.067 | 1.406 | 0.002 | 0.0038 | 0.003 | 0.041 | 0.116 | 0.000 | 0.003 |
| D | 0.070 | 1.927 | 0.010 | 0.0017 | 0.005 | 0.025 | 0.106 | 0.005 | - |
| E | 0.078 | 1.560 | 0.000 | 0.0029 | 0.002 | 0.028 | 0.110 | 0.017 | - |
| F | 0.075 | 1.863 | 0.015 | 0.0020 | 0.000 | 0.038 | 0.144 | 0.000 | - |
| G | 0.063 | 1.415 | 0.015 | 0.0012 | 0.000 | 0.051 | 0.112 | 0.024 | - |
| H | 0.075 | 1.851 | 0.013 | 0.0037 | 0.005 | 0.030 | 0.150 | 0.023 | - |
| I | 0.099 | 1.862 | 0.007 | 0.0020 | 0.002 | 0.073 | 0.125 | 0.013 | - |
| J | **0.104** | **2.050** | 0.000 | 0.0000 | 0.001 | 0.036 | 0.122 | 0.023 | - |
| K | **0.046** | **1.360** | 0.007 | 0.0037 | 0.004 | 0.036 | 0.123 | - | - |
| L | 0.055 | 1.479 | 0.001 | 0.0017 | 0.003 | 0.072 | 0.104 | 0.014 | **0.004** |
| M | 0.092 | 1.686 | 0.011 | 0.0018 | 0.001 | 0.061 | **0.095** | 0.014 | - |

Note: In Table 1, steel A-I are those used in the examples of the present disclosure, while steel J-M are those used in the comparative examples.

Table 2 lists the specific process parameters in the above steps for each example and comparative example of the present disclosure.

Table 2

| | Steel grade | Heating temperature/ °C | Start rolling temperature for rough rolling /°C | Start rolling temperature for finish rolling /°C | Outlet temperature for finish rolling /°C | Cooling rate after rolling °C/s | Coiling temperature /°C | Temperature in a direct-fired section /°C | Temperature in a heating section /°C | Temperature in a soaking section /°C | Soaking time /s | Temperature in a slow cooling section /°C | Temperature in zinc pot /°C | Temper rolling rate /% |
|---|---|---|---|---|---|---|---|---|---|---|---|---|---|---|
| Ex.1 | A | 1250 | 1130 | 1050 | 840 | 50 | 500 | 550 | 630 | 630 | 70 | 550 | 440 | 0.5 |
| Ex.2 | A | 1280 | 1160 | 1020 | 940 | 60 | 460 | 620 | 720 | 710 | 100 | 630 | 460 | 0.4 |
| Ex.3 | A | 1240 | 1150 | 1060 | 890 | 50 | 460 | 600 | 710 | 720 | 100 | 670 | 480 | 0.2 |
| Ex.4 | A | 1260 | 1140 | 980 | 850 | 75 | 460 | 560 | 700 | 710 | 100 | 640 | 460 | 0.4 |
| Ex.5 | B | 1270 | 1160 | 1030 | 900 | 60 | 490 | 630 | 700 | 710 | 80 | 560 | 480 | 0.8 |
| Ex.6 | B | 1280 | 1130 | 1080 | 900 | 75 | 450 | 620 | 700 | 710 | 100 | 590 | 470 | 0.8 |
| Ex.7 | B | 1270 | 1180 | 980 | 860 | 60 | 470 | 600 | 700 | 710 | 90 | 670 | 450 | 1.1 |
| Ex.8 | C | 1250 | 1140 | 1000 | 940 | 60 | 480 | 630 | 680 | 680 | 60 | 600 | 450 | 0.2 |
| Ex.9 | C | 1240 | 1150 | 1000 | 850 | 60 | 460 | 580 | 680 | 680 | 60 | 590 | 440 | 0.05 |
| Ex.10 | C | 1270 | 1150 | 1030 | 890 | 70 | 450 | 560 | 680 | 680 | 50 | 550 | 450 | 0.5 |
| Ex.11 | D | 1280 | 1160 | 980 | 900 | 70 | 450 | 580 | 700 | 710 | 80 | 610 | 460 | 0.2 |
| Ex.12 | E | 1280 | 1150 | 990 | 940 | 60 | 470 | 550 | 700 | 710 | 90 | 570 | 470 | 0.2 |
| Ex.13 | F | 1230 | 1160 | 1020 | 890 | 55 | 500 | 620 | 700 | 710 | 60 | 640 | 460 | 0.2 |
| Ex.14 | G | 1230 | 1190 | 1040 | 910 | 70 | 470 | 590 | 700 | 710 | 80 | 580 | 480 | 0.8 |
| Ex.15 | H | 1260 | 1130 | 1080 | 940 | 50 | 480 | 630 | 700 | 710 | 70 | 610 | 440 | 0.4 |
| Ex.16 | I | 1260 | 1160 | 1010 | 900 | 70 | 490 | 600 | 700 | 710 | 80 | 570 | 470 | 0.1 |
| Com.Ex.1 | J | 1250 | 1140 | 1040 | 870 | 55 | 480 | 570 | 700 | 710 | 60 | 670 | 450 | 0.9 |
| Com.Ex.2 | **K** | 1280 | 1180 | 1080 | 850 | 75 | 480 | 580 | 700 | 710 | 90 | 610 | 480 | 0.6 |
| Com.Ex.3 | **L** | 1270 | 1150 | 1050 | 870 | 70 | 450 | 610 | 700 | 710 | 50 | 600 | 470 | 0.3 |
| Com.Ex.4 | **M** | 1280 | 1180 | 1000 | 850 | 55 | 490 | 600 | 700 | 710 | 80 | 660 | 470 | 0.3 |
| Com.Ex.5 | A | 1270 | 1150 | 1080 | 910 | 55 | 490 | 590 | 630 | **620** | 100 | 570 | 440 | 0.8 |
| Com.Ex.6 | A | 1240 | 1190 | 980 | 850 | 55 | 450 | 570 | 720 | **730** | 50 | 670 | 460 | 0.1 |
| Com.Ex.7 | A | 1260 | 1140 | 1010 | 930 | 65 | 470 | 550 | **620** | 630 | 50 | 570 | 460 | 0.4 |
| Com.Ex.8 | A | 1270 | 1160 | 980 | 870 | 70 | 450 | **640** | **730** | 720 | 60 | 670 | 470 | 0.7 |

(continued)

| | Steel grade | Heating temperature/ °C | Start rolling temperature for rough rolling /°C | Start rolling tempera ture for finish rolling /°C | Outlet temperature for finish rolling /°C | Cooling rate after rolling °C/s | Coiling temperature /°C | Temperature in a direct-fired section /°C | Temperature in a heating section /°C | Temperature in a soaking section /°C | Soaking time /s | Temperature in a slow cooling section /°C | Temperature in zinc pot /°C | Temper rolling rate /% |
|---|---|---|---|---|---|---|---|---|---|---|---|---|---|---|
| Com.Ex.9 | A | 1270 | 1160 | 990 | 860 | 55 | 450 | 550 | 700 | 710 | __110__ | 650 | 470 | 1.1 |
| Com.Ex.10 | A | 1270 | 1150 | 1030 | 910 | 55 | 500 | 550 | 700 | 710 | 90 | __680__ | 480 | 0.4 |
| Com.Ex.11 | B | 1280 | 1130 | 1010 | 920 | 75 | __440__ | 600 | 700 | 710 | 100 | 560 | 480 | 0.2 |
| Com.Ex.12 | B | 1280 | 1150 | 1030 | 860 | 65 | __510__ | 560 | 700 | 710 | 90 | 610 | 440 | 1.3 |
| Com.Ex.13 | B | 1270 | 1160 | 1080 | 860 | __45__ | 460 | 630 | 700 | 710 | 90 | 630 | 440 | 0.1 |

The hot-dip galvanized steel plates of Examples 1-16 and Comparative Examples 1-18 obtained are sampled respectively, and the microstructure of the sample of each example is observed using an optical microscope and scanning electron microscope. The grain size is measured using the equivalent area method. The size distribution and volume fraction of the second-phase precipitates are measured using the extraction carbon replica method, and the test results are listed in Table 3.

Table 3

| | Substrate matrix structure | | Second-phase particles | |
|---|---|---|---|---|
| | Bainite /% | Grain size of bainite /μm | Volume fraction | Volume fraction of particles ≤10nm |
| Ex.1 | 97 | 3.1 | 0.23 | 80 |
| Ex.2 | 96 | 3.5 | 0.34 | 90 |
| Ex.3 | 96 | 3.4 | 0.22 | 82 |
| Ex.4 | 99 | 4.4 | 0.20 | 89 |
| Ex.5 | 96 | 4.3 | 0.21 | 95 |
| Ex.6 | 99 | 3.1 | 0.27 | 90 |
| Ex.7 | 98 | 4 | 0.28 | 83 |
| Ex.8 | 99 | 4.2 | 0.27 | 86 |
| Ex.9 | 96 | 4 | 0.24 | 87 |
| Ex.10 | 98 | 4.6 | 0.20 | 94 |
| Ex.11 | 97 | 3.1 | 0.33 | 94 |
| Ex.12 | 98 | 4.7 | 0.35 | 81 |
| Ex.13 | 98 | 3.7 | 0.27 | 92 |
| Ex.14 | 99 | 3.4 | 0.21 | 92 |
| Ex.15 | 100 | 4.1 | 0.31 | 90 |
| Ex.16 | 96 | 3.8 | 0.28 | 81 |
| Com.Ex.1 | **92** | 3.8 | 0.28 | 95 |
| Com.Ex.2 | 96 | 4.9 | **0.13** | **87** |
| Com.Ex.3 | **75** | 3.9 | **0.27** | **80** |
| Com.Ex.4 | 97 | 4.1 | **0.18** | **87** |
| Com.Ex.5 | 99 | 3.7 | **0.17** | 92 |
| Com.Ex.6 | **92** | 3.2 | 0.24 | 85 |
| Com.Ex.7 | 100 | 4.9 | **0.15** | 82 |
| Com.Ex.8 | **86** | 3.3 | 0.27 | 82 |
| Com.Ex.9 | 100 | 4.5 | 0.21 | **68** |
| Com.Ex.10 | 96 | 4.9 | 0.32 | **62** |
| Com.Ex.11 | **85** | 4.8 | 0.33 | 90 |
| Com.Ex.12 | **82** | **6** | 0.24 | **65** |
| Com.Ex.13 | **88** | **5.3** | 0.21 | **73** |

In addition, for each example and comparative example, longitudinal direction JIS 13B specimens are taken to measure yield strength and tensile strength, with a gauge length of 80mm. The mechanical performance tests are conducted in accordance with GB/T228.1-2010 standard. The hole expansion ratio is tested according to GB/T24524-2021 standard, and the test results are listed in Table 4.

Table 4

| | Mechanical performance | | | |
|---|---|---|---|---|
| | Rp0.2/MPa | Rm/MPa | A80/% | Hole expansion ratio /% |
| Ex.1 | 693 | 823 | 18 | 59.8 |
| Ex.2 | 733 | 833 | 16.8 | 75.9 |
| Ex.3 | 709 | 832 | 17.3 | 77.6 |
| Ex.4 | 720 | 824 | 18.2 | 56.1 |
| Ex.5 | 696 | 825 | 15.6 | 68.4 |
| Ex.6 | 791 | 804 | 15.3 | 71.5 |
| Ex.7 | 788 | 807 | 15 | 68.2 |
| Ex.8 | 755 | 831 | 17.4 | 50 |
| Ex.9 | 703 | 835 | 19.4 | 50.1 |
| Ex.10 | 714 | 830 | 16.6 | 52.9 |
| Ex.11 | 725 | 807 | 18.4 | 51 |
| Ex.12 | 777 | 809 | 16.4 | 57.8 |
| Ex.13 | 795 | 830 | 15.1 | 79.7 |
| Ex.14 | 739 | 848 | 16 | 75.2 |
| Ex.15 | 797 | 812 | 16.1 | 55.8 |
| Ex.16 | 785 | 809 | 17.2 | 693 |
| Com.Ex.1 | 759 | 837 | 17.3 | **45.6** |
| Com.Ex.2 | **615** | **782** | 18 | 52.9 |
| Com.Ex.3 | 696 | 831 | 15.2 | **32.3** |
| Com.Ex.4 | **668** | **785** | 16.2 | 58.4 |
| Com.Ex.5 | **678** | 844 | 19.9 | 58.6 |
| Com.Ex.6 | **653** | 886 | 15.3 | **45.2** |
| Com.Ex.7 | **666** | 819 | 19.1 | 50.4 |
| Com.Ex.8 | **672** | 809 | 17.5 | **31.3** |
| Com.Ex.9 | **648** | 800 | 16.7 | 54.9 |
| Com.Ex.10 | **633** | 809 | 19.4 | 79 |
| Com.Ex.11 | 739 | 807 | 17.5 | **48.1** |
| Com.Ex.12 | **658** | 818 | 17.8 | 82.3 |
| Com.Ex.13 | **632** | 816 | 16.1 | 70.9 |

As shown in Tables 3 and 4, through reasonable chemical element composition design, combined with optimized hot-rolling process and annealing and hot-dip galvanizing process, the desirable structural characteristics are obtained with refined grain size in Examples 1-16 of the present disclosure. The annealing and hot-dip galvanizing heating process promote substantial precipitation of second-phase particles, thereby improving strength without reducing plasticity. The temperature in each stage of the annealing process is strictly controlled to prevent coarsening of the second-phase particles, which is key to achieving good performance. The final product in each example of the present disclosure has a longitudinal yield strength of 680 MPa or more, a tensile strength of 800 MPa or more, an elongation A80 of 15% or more, and a hole expansion ratio of ≥50%.

In contrast to the present disclosure:

In Comparative Example 1, due to the contents of carbon and manganese exceeding the upper limit specified in the present disclosure, a higher amount of martensite forms during the hot rolling process, resulting in a reduced bainite content and a lower hole expansion ratio.

In Comparative Example 2, the contents of carbon and manganese are below the lower limit specified in the present disclosure, resulting in insufficient strength.

In Comparative Example 3, with the addition of element B, due to the content of B exceeding the upper limit specified in the present disclosure, martensite is formed during the hot rolling process, resulting in a decrease in the hole expansion ratio.

In Comparative Example 4, the content of Ti is below the lower limit specified in the present disclosure, resulting in a lower precipitation amount of second-phase particle and lower strength.

In Comparative Example 5, due to the soaking section temperature being below the lower limit specified in the present disclosure, there is less second-phase precipitation during the hot-dip galvanizing and annealing process, resulting in a decrease in yield strength.

In Comparative Example 6, due to the soaking section temperature being higher than the upper limit specified in the present disclosure, austenite is formed during the heating process and phase transformed into martensite during the cooling process, a proportion of bainite is reduced, resulting in lower yield strength and hole expansion ratio of the steel plate.

In Comparative Example 7, due to the heating section temperature being below the lower limit specified in the present disclosure, there is less second-phase precipitation during the hot-dip galvanizing and annealing process, resulting in a decrease in yield strength.

In Comparative Example 8, due to the direct-fired section temperature and heating section temperature being higher than the upper limit specified in the present disclosure, austenite is formed during the heating process and phase transformed to martensite during the cooling process, a proportion of bainite is reduced, resulting in lower yield strength and hole expansion ratio of the steel plate.

In Comparative Example 9, the soaking time is higher than the upper limit specified in the present disclosure, resulting in the coarsening of the second phase and a decrease in yield strength.

In Comparative Example 10, the slow cooling section temperature is higher than the upper limit specified in the present disclosure, resulting in the coarsening of the second phase and a decrease in yield strength.

In Comparative Example 11, due to the coiling temperature being below the lower limit specified in the present disclosure, martensite is generated after hot rolling, resulting in a decrease in bainite content and a reduction in the hole expansion ratio.

In Comparative Example 12, due to the coiling temperature being higher than the upper limit specified in the present disclosure, more ferrite is generated during the hot rolling process, accompanied by substantial precipitation, leading to a decrease in yield strength.

In Comparative Example 13, due to the cooling rate after hot rolling is lower than the lower limit specified in the present disclosure, more ferrite is generated, accompanied by substantial precipitation, leading to a decrease in yield strength.

It should be noted that the ways in which the various technical features of the present disclosure are combined are not limited to the ways recited in the claims of the present disclosure or the ways described in the specific examples. All the technical features recited in the present disclosure may be combined or integrated freely in any manner, unless contradictions are resulted.

It should also be noted that the Examples set forth above are only specific examples according to the present disclosure. Obviously, the present disclosure is not limited to the above Examples. Similar variations or modifications made thereto can be directly derived or easily contemplated from the present disclosure by those skilled in the art. They all fall in the protection scope of the present disclosure.

**Claims**

1. A hot-dip galvanized steel plate with a tensile strength of ≥800MPa, comprising a substrate and a hot-dip galvanized layer, the substrate comprises Fe and inevitable impurities, wherein the substrate further comprises the following chemical elements in mass percentages:

   C: 0.050-0.100%, Mn: 1.400-2.000%, Ti: 0.100-0.150%, and Al: 0.020-0.080%;
   the substrate does not comprise elements Si, Cr, Mo, and Ni;
   the microstructure of the substrate comprises a complex phase structure of granular bainite and ferrite, as well as second-phase particle precipitates, the second-phase particle precipitates have a volume fraction of not less than 0.2%, and a volume fraction of the second-phase particle precipitates with a size of not greater than 10nm in total second-phase particle precipitates is greater than or equal to 80%.

2. The hot-dip galvanized steel plate according to claim 1, wherein the mass percentages of each chemical element in the substrate are:

C: 0.050-0.100%, Mn: 1.400-2.000%, Ti: 0.100-0.150%, Al: 0.020-0.080%; with a balance of Fe and other inevitable impurities.

3. The hot-dip galvanized steel plate according to claim 1 or 2, wherein the substrate further comprises at least one of the following chemical elements:

$$0 < Nb \leq 0.030\%;$$

and

$$0 < B \leq 0.003\%.$$

4. The hot-dip galvanized steel plate according to claim 1 or 2, wherein among the inevitable impurities of the substrate: P≤0.02%, N≤0.005%, and S≤0.005%.

5. The hot-dip galvanized steel plate according to claim 1 or 2, wherein the granular bainite has a volume fraction of not less than 95%, and/or the grain size of the granular bainite is less than 5μm.

6. The hot-dip galvanized steel plate according to claim 1 or 2, wherein the single-side weight of the hot-dip galvanized layer is 20-380g/m2.

7. The hot-dip galvanized steel plate according to claim 1 or 2, wherein the second-phase particle precipitates have a volume fraction of 0.2-0.35%, and/or a volume fraction of the second-phase particle precipitates with a size of not greater than 10nm in total second-phase particle precipitates is 80-95%.

8. The hot-dip galvanized steel plate according to claim 1 or 2, wherein it has a yield strength of ≥680MPa, a tensile strength of ≥800MPa, an elongation A80 of ≥15.0%, and a hole expansion ratio of ≥50.0%.

9. The hot-dip galvanized steel plate according to claim 1 or 2, wherein the hot-dip galvanized steel plate has a yield strength of 680-800MPa, a tensile strength of 800-850MPa, an elongation A80 of 15.0-19.5%, and a hole expansion ratio of 50.0-80.0%.

10. The manufacturing method for the hot-dip galvanized steel plate according to any one of claims 1 to 9, wherein it comprises the steps of:

(1) preparing a slab;
(2) heating the slab and holding;
(3) hot rolling, then cooling at a cooling rate of ≥50°C/s to a coiling temperature of 450-500°C and coiling;
(4) pickling to obtain a pickled coil;
(5) annealing and hot-dip galvanizing: the pickled coil is directly annealed in a fired non-oxidizing continuous annealing furnace, wherein a temperature in a direct-fired section is controlled at 550-630°C, a temperature in a heating section is controlled at 630-720°C, a temperature in a soaking section is controlled at 630-720°C, a holding time in a soaking section is controlled at 50-100s, a temperature in a slow cooling section is controlled at 550-670°C, and after exiting the slow cooling section, it is cooled to a hot-dip galvanizing temperature.

11. The manufacturing method according to claim 10, wherein the slab is heated to 1230-1280°C with a holding a time of 1-3 hours.

12. The manufacturing method according to claim 10, wherein in the hot rolling step, a start rolling temperature for rough rolling is controlled at 1130-1190°C, a start rolling temperature for finish rolling is controlled at 980-1080°C, and an outlet temperature for finish rolling is controlled at 840-940°C; preferably, a cumulative deformation amount of rough rolling and finish rolling is controlled at ≥90%.

13. The manufacturing method according to claim 10, wherein in the hot-dip galvanizing process, a hot-dip galvanizing temperature is 440-480°C.

14. The manufacturing method according to claim 10, wherein temper rolling is carried out after the hot-dip galvanizing process, and a temper rolling rate is controlled at 0.05-1.3%.

15. The manufacturing method according to claim 10, wherein after the completion of the coiling process in step(3), the hot coil is placed in a soaking pit for slow cooling, and an average cooling rate is controlled at $\leq15°C/h$; and/or, an elongation of the pickling tension leveling is 0.2-2%; and/or, a pickling speed of 60-150m/min is adopted, a temperature of the last pickling acid tank during the pickling process is controlled at 80-90°C, and a concentration of ferric ion is controlled at 30-40g/L.

## INTERNATIONAL SEARCH REPORT

| International application No. |
| --- |
| **PCT/CN2024/115005** |

### A. CLASSIFICATION OF SUBJECT MATTER

C22C38/04(2006.01)i; C22C38/02(2006.01)i; C22C38/06(2006.01)i; C22C38/14(2006.01)i

According to International Patent Classification (IPC) or to both national classification and IPC

### B. FIELDS SEARCHED

Minimum documentation searched (classification system followed by classification symbols)

IPC: C22C

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI; ISI_WEB OF SCIENCE; 万方, WANFANG; 超星读秀, DUXIU; 宝山钢铁股份有限公司, 贝氏体, 镀, 锌, 钢, 缓冷, 卷, 均热, 速度, 速率, 铁素体, 涂覆, 直火, cr, mo, ni, si, bainite, plating, zinc, steel, roll, soaking, speed, rate, ferrite, coating, direct fire

### C. DOCUMENTS CONSIDERED TO BE RELEVANT

| Category* | Citation of document, with indication, where appropriate, of the relevant passages | Relevant to claim No. |
| --- | --- | --- |
| A | CN 113215486 A (SHOUGANG GROUP CO., LTD.) 06 August 2021 (2021-08-06) description, paragraphs 4-29 | 1-15 |
| A | CN 107475625 A (MAANSHAN IRON & STEEL CO., LTD.) 15 December 2017 (2017-12-15) description, paragraphs 4-31 | 1-15 |
| A | CN 114959478 A (SD STEEL RIZHAO CO., LTD.) 30 August 2022 (2022-08-30) description, paragraphs 5-31 | 1-15 |
| A | JP H05171293 A (KOBE STEEL LTD.) 09 July 1993 (1993-07-09) claim 1 | 1-15 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 September 2024** | **11 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/115005**

| Patent document cited in search report | | | Publication date (day/month/year) | Patent family member(s) | | | Publication date (day/month/year) |
|---|---|---|---|---|---|---|---|
| CN | 113215486 | A | 06 August 2021 | CN | 113215486 | B | 20 May 2022 |
| CN | 107475625 | A | 15 December 2017 | CN | 107475625 | B | 30 April 2019 |
| CN | 114959478 | A | 30 August 2022 | CN | 114959478 | B | 02 May 2023 |
| JP | H05171293 | A | 09 July 1993 | JP | H0826411 | B2 | 13 March 1996 |

Form PCT/ISA/210 (patent family annex) (July 2022)

**EP 4 772 664 A1**

REFERENCES CITED IN THE DESCRIPTION

**Patent documents cited in the description**

- CN 104513930 A
- CN 113215485 A